# EUROPEAN PATENT SPECIFICATION

(11) **EP 3 047 968 B1**
(45) Date of publication and mention of the grant of the patent: **13.06.2018**
(21) Application number: 16152009.3
(22) Date of filing: 20.01.2016
(51) Int. Cl.: B32B 15/20, B32B 15/08, B32B 27/20, B32B 27/28, B32B 27/38, B32B 27/42, F15B 15/00

(54) **THERMALLY RESISTANT ACTUATOR SYSTEM**
THERMISCHBESTÄNDIGES AKTUATORSYSTEM
SYSTÈME D'ACTIONNEUR THERMIQUEMENT RÉSISTANT

(30) Priority: 20.01.2015 US 201514601117
(43) Date of publication of application: 27.07.2016
(73) Proprietor: United Technologies Corporation, Farmington, CT 06032 (US)
(72) Inventor: STROCK, Christopher W., Kennebunk, ME 04043 (US)
(74) Representative: de Bresser, Sara Jean

(56) References cited:
- WO-A2-02/16519
- US-A- 6 071 628
- DATABASE WPI Week 200970 Thomson Scientific, London, GB; AN 2009-P08379 XP002758681, & CN 101 531 864 A (UNIV SHANDONG) 16 September 2009 (2009-09-16)
- DATABASE WPI Week 201326 Thomson Scientific, London, GB; AN 2013-D93923 XP002758682, & CN 102 863 895 A (SHANDONG LIAOCHENG QILU SPECIALTY COATIN) 9 January 2013 (2013-01-09)
- DATABASE WPI Week 201257 Thomson Scientific, London, GB; AN 2012-G27018 XP002758683, & CN 102 453 423 A (BEIJING AEROSPACE FRESH MECHANICAL EQUIP) 16 May 2012 (2012-05-16)

## Description

### BACKGROUND

Aircraft engine external components, such as hydraulic actuators, are often made of iron-based alloys. Although iron-based alloys are relatively dense and heavy, they are needed in order for the components to meet functional requirements under severe environmental conditions. Less dense and lighter materials could reduce weight; however, these materials cannot simply be substituted for the iron-based alloys because the component would not meet the functional requirements under the environmental conditions.

CN 102 863 895 A discloses a high temperature resistant and heat insulating paint used for heat insulation and protection of aircrafts. The paint is based on a polymeric composition which may comprise hollow ceramic or glass microspheres as high temperature resistant filler.

### SUMMARY

A thermally resistant actuator system according to the present disclosure includes an actuator and a handle that is moveable to operate the actuator. The handle is formed of an aluminum-based alloy heat-sensitive core and a thermal protection layer on the exterior of the heat-sensitive core to provide thermal shielding. The thermal protection layer has a thickness of 1 to 4 mm and a composition such that the handle maintains structural integrity such that the actuator system remains operable after exposure to a flame exposing the handle to a temperature of 1100°C with a thermal flow density of 116 kW/m² and a gas burner diameter of 184 mm for a duration of five minutes, wherein without the thermal protection layer the handle does not maintain said structural integrity after said exposure, and the composition includes a thermoset polymeric material mixed with microspheres formed of aluminum oxides, silicon oxides, zirconium oxides, or combinations thereof.

In a further embodiment of any of the foregoing embodiments, the polymeric material, notwithstanding the microspheres, is porous.

In a further embodiment of any of the foregoing embodiments, the polymeric material, notwithstanding the microspheres, has a density of 0.15 to 0.5 g/cm³.

In a further embodiment of any of the foregoing embodiments, the microspheres have a multi-modal size distribution.

In a further embodiment of any of the foregoing embodiments, the polymeric material includes polyimide.

A further embodiment of any of the foregoing embodiments includes a bond layer between the heat-sensitive core and a thermal protection layer.

A method for forming a thermally resistant actuator system comprising an actuator; and a handle that is moveable to operate the actuator, and the handle is formed of an aluminum alloy heat-sensitive core according to the present disclosure includes forming a thermal protection layer on an exterior of the heat-sensitive core of the handle to provide thermal shielding. The thermal protection layer is formed with a thickness of 1 to 4 mm and a composition such that the handle maintains structural integrity such that the actuator system remains operable after exposure to a flame exposing the handle to a temperature of 1100°C with a thermal flow density of 116 kW/m² and a gas burner diameter of 184 mm for a duration of five minutes, wherein without the thermal protection layer the handle does not maintain said structural integrity after said exposure, and the composition includes a thermoset polymeric material mixed with microspheres formed of aluminum oxides, silicon oxides, zirconium oxides, or combinations thereof.

In a further embodiment of any of the foregoing embodiments, the forming includes injecting the polymeric material mixed with microspheres into a mold and curing the polymeric material under controlled temperature conditions in the mold.

In a further embodiment of any of the foregoing embodiments, the forming includes injecting the polymeric material mixed with microspheres into a mold around the heat sensitive core.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example thermally resistant article formed of a heat-sensitive core and a thermal protection layer.
Figure 2 illustrates another example thermally resistant article that includes a bond layer between a heat-sensitive core and a thermal protection layer.
Figure 3 illustrates an example thermally resistant actuator system that has a handle that is formed of a heat-sensitive core and a thermal protection layer.

### DETAILED DESCRIPTION

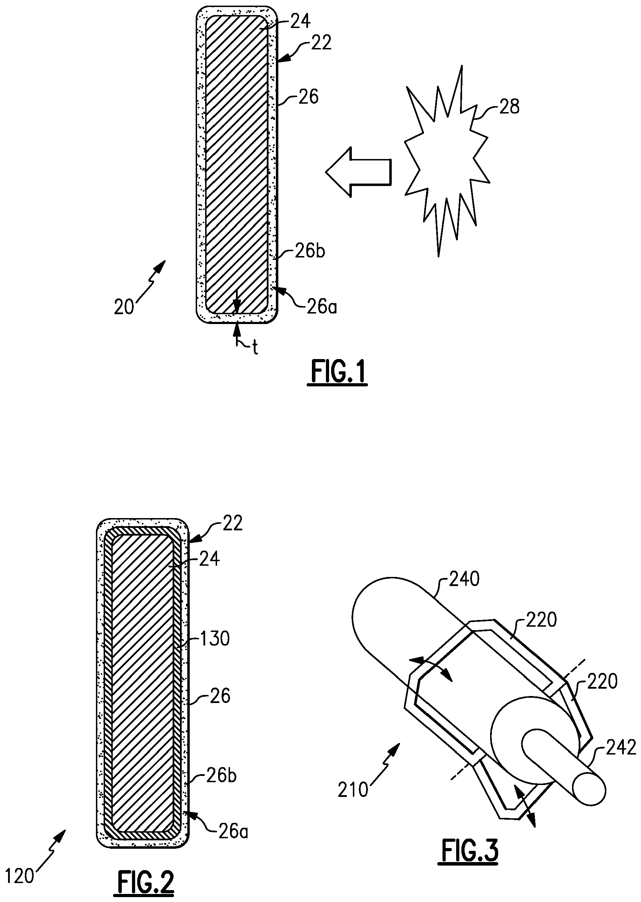

Figure 1 schematically illustrates an example thermally resistant article 20. The article 20 can be made mainly of a low density material to reduce the weight of the article 20 in comparison to iron-based materials, but also includes a thermal barrier to enable use of the low density material under transient thermal conditions that the low density material would otherwise not survive.

The article 20 includes a structural body 22 that is formed of a heat-sensitive core 24 and a thermal protection layer 26 on the exterior of the heat-sensitive core 24. The structural body 22 is a load-bearing, self-supporting member. The heat-sensitive core 24 is an aluminum-based alloy.

Aluminum alloys and polymer composites, although light weight, are thermally limited in comparison to iron-based alloys. Thus, in instances where an iron-based alloy is used for strength and thermal resistance in severe environmental conditions, such as transient thermal events at temperatures exceeding the melting point of aluminum or exceeding the melting point or glass transition point of the polymer, an aluminum-based alloy or a polymer composite would not maintain sufficient strength as the iron-based alloy would in order to continue to function properly under load-bearing conditions. In this regard, the thermal protection layer 26 thermally shields the heat-sensitive core 24 to enhance the thermal resistance of the article 20 under transient exposures to a heat source 28 and allow the article 20 to continue to function properly under load-bearing conditions.

The thermal protection layer 26 can be a coating that is applied on the exterior surface of the heat-sensitive core 24. In the example shown, the coating of the thermal protection layer 26 fully encases the heat-sensitive core 24. Alternatively, the thermal protection layer 26 is applied only on the surfaces of the heat-sensitive core 24 that will be exposed to the heat source 28 or the surfaces that will see the highest temperature exposure. In another alternative, rather than a coating, the thermal protection layer 26 can be one or more pre-fabricated panels that are bonded to the heat-sensitive core 24.

The thermal protection layer 26 has a thickness, shown at t, and a composition such that the structural body 22 meets a target strength-thermal performance criteria upon transient exposure to the heat source 28, such as a flame. Without the thermal protection layer 26, the heat-sensitive core 24 would not meet the target strength-thermal performance criteria and would thus not continue to function properly under load-bearing conditions. For instance, the heat-sensitive core 24 may have a threshold temperature, such as a melting temperature or glass transition temperature, at which the material that the heat-sensitive core 24 is formed of either melts or softens to a point at which the structural body 22 can no longer function properly in its load-bearing structural capacity. The thermal protection layer 26 thermally shields the heat-sensitive core 24 upon transient exposure to the heat source 28 such that the heat-sensitive core 24 can maintain structural integrity and continue to function properly.

The thickness of the thermal protection layer 26 is 1 - 4 millimeters and the composition includes a polymeric material 26a mixed with microspheres 26b. The thickness and the composition with respect to the amount and kind of polymeric material 26a and the amount and kind of microspheres 26b are selected such that the structural body 22 meets the target strength-thermal performance criteria upon transient exposure to the heat source 28. For example, testing of various thicknesses and compositions as disclosed herein may be conducted to identify a desirable combination of thickness and composition for a given target strength-thermal performance criteria and given transient exposure condition to the heat source 28.

The polymeric material 26a of the thermal protection layer 26 is a thermoset polymer which chars under the conditions of exposure to the heat source 28. The resulting char functions as a thermal barrier to protect the underlying heat-sensitive core 24. Example thermoset polymers can include epoxy, phenolic, polyimide, or combinations thereof. Vespel® FF-0920 (E. I. Du Pont De Nemours and Company) is one example polyimide.

In further examples, the polymeric material 26a of the thermal protection layer 26 can be a foam, to further reduce weight and enhance thermal barrier properties. In this regard, the polymeric material 26a, notwithstanding the microspheres 26b, is porous. In one further example, the polymeric material 26a is up to 35vol% porous. For example, the polymeric material 26a can bond together the microspheres 26b at contact points while maintaining interstitial voids and interconnected porosity. The porosity may facilitate processing and curing polymer or polymer solutions that outgas.

In further examples, the thermal protection layer 26 can include a relatively high volume fraction of the microspheres 26b. For example, the thermal protection layer 26 can include up to 98 vol/% of the microspheres 26b, counting the interior volume of the microspheres 26b. The microspheres 26b can have a multi-modal size distribution in order to increase the packing factor to obtain a desired volume percentage.

The microspheres 26b can be solid, but more typically would be hollow for better thermal barrier properties. The microspheres 26b are formed of aluminum oxides, silicon oxides, zirconium oxides, or combinations thereof. Glass-containing microspheres may also melt upon thermal exposure and continue to provide thermal protection by solidifying or partially solidifying as a thermal film or thermal microfilm.

Figure 2 illustrates another example article 120 that is somewhat similar to the article 20 but includes a bond layer 130 between the heat-sensitive core 24 and the thermal protection layer 26. The composition of the bond layer 130 can be selected based upon the material selected for the heat-sensitive core 24 and/or the material selected for the thermal protection layer 26. For instance, an aluminum-based alloy of the heat-sensitive core 24 can be anodized to provide an anodized layer or a duplex anodized layer as the bond layer 130, which facilitates adhesion with the thermal protection layer 26. In another example, the bond layer 130 is an adhesive of the same polymeric material 26a as the thermal protection layer 26, but without the microspheres 26b.

In a further example, the exterior surface of the heat-sensitive core 24 is surface-treated prior to application of the bond layer 130 or, if no bond layer 130, prior to application of the thermal protection layer 26. The surface treatment enhances adhesion and can include cleaning the surface, grit blasting the surface, chemically treating/modifying the surface, or combinations thereof.

Figure 3 illustrates an example implementation of the heat-sensitive core 24 and the thermal protection layer 26 as a handle in a thermally resistant actuator system 210. The actuator system 210 includes an actuator 240 with a plunger 242. For example, the actuator 240 is a hydraulic or pneumatic cylinder that is operable to extend and retract the plunger 242. In this regard, the actuator system 210 includes one or more handles 220 that are movable to operate the actuator 240 with respect to the plunger 242. The handle 220 is formed of the heat-sensitive core 24 and the thermal protection layer 26, as described above.

As an example, the actuator system 210 may be employed as an external component of an aircraft engine. The actuator system 210 has a target strength-thermal performance criteria with regard to the handle or handles 220, i.e., under exposure to a flame exposing the handle to a temperature of 1100°C with a thermal flow density of 116 +/- kW/m² and a gas burner diameter of 184 mm for a duration of five minutes, the handle or handles 220 maintain structural integrity such that the actuator system 210 remains operable after such exposure. In this regard, whereas an iron-based alloy might have been previously used for the handles, the handle or handles 220 can be formed with the heat-sensitive core 24 of a relatively lighter weight material, yet be protected by the thermal protection layer 26 in order to meet the strength/thermal performance criteria.

The thermally resistant article 20/120/220 can be fabricated by forming the thermal protection layer 26 on the exterior of the heat-sensitive core 24. For example, a mixture of the polymeric material 26a and the microspheres 26b can be applied onto the exterior surfaces of the heat-sensitive core 24 by dipping or painting the mixture thereon. The mixture may be in a carrier solvent to facilitate application.

In another example, the thermal protection layer 26 is molded around the heat-sensitive core 24. For example, the heat-sensitive core 24 is inserted into a mold such that there is a cavity between the exterior surfaces of the heat-sensitive core 24 and the internal surfaces of the mold. The mold may be heated to a controlled temperature for curing the polymeric material 26a of the thermal protection layer 26. The mixture of the polymeric material 26a and the microspheres 26b is injected into the cavity space around the heat-sensitive core 24 and is then cured under controlled temperature conditions to thereby form the thermal protection layer 26.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

## Claims

1. A thermally resistant actuator system (210) comprising:
an actuator (240); and
a handle (220) that is moveable to operate the actuator (240), and the handle (220) is formed of an aluminum-based alloy heat-sensitive core (24) and a thermal protection layer (26) on the exterior of the heat-sensitive core (24) to provide thermal shielding,
the thermal protection layer (26) having a thickness of 1 to 4 mm and a composition such that the handle (220) maintains structural integrity such that the actuator system 210 remains operable after exposure to a flame exposing the handle to a temperature of 1100°C with a thermal flow density of 116 kW/m² and a gas burner diameter of 184 mm for a duration of five minutes, wherein without the thermal protection layer (26) the handle (220) does not maintain said structural integrity after said exposure, and
the composition includes a thermoset polymeric material (26a) mixed with microspheres (26b) formed of aluminum oxides, silicon oxides, zirconium oxides, or combinations thereof.

2. The system as recited in any preceding claim, wherein the polymeric material (26a), notwithstanding the microspheres, is porous.

3. The system as recited in any preceding claim, wherein the polymeric material (26a), notwithstanding the microspheres (26b), has a density of 0.15 to 0.5 g/cm³.

4. The system as recited in any preceding claim, wherein the microspheres (26b) have a multi-modal size distribution.

5. The system as recited in any preceding claim, wherein the polymeric material (26a) includes polyimide.

6. The system as recited in any preceding claim, wherein further comprising a bond layer (130) between the heat-sensitive core (24) and a thermal protection layer (26).

7. A method for forming a thermally resistant actuator system (210) comprising an actuator (240); and a handle (220) that is moveable to operate the actuator (240), and the handle (220) is formed of an aluminum alloy heat-sensitive core (24), the method comprising:
forming a thermal protection layer (26) on an exterior of the heat-sensitive core (24) of the handle (220) to provide thermal shielding,
the thermal protection layer (26) being formed with a thickness of 1 to 4 mm and a composition such that the handle (220) maintains structural integrity such that the actuator system (210) remains operable after exposure to a flame exposing the handle to a temperature of 1100°C with a thermal flow density of 116 kW/m² and a gas burner diameter of 184 mm for a duration of five minutes, wherein without the thermal protection layer (26) the handle (220) does not maintain said structural integrity after said exposure, and
the composition includes a thermoset polymeric material (26a) mixed with microspheres (26b) formed of aluminum oxides, silicon oxides, zirconium oxides, or combinations thereof.

8. The method as recited in claim 10, wherein the forming includes injecting the polymeric material (26a) mixed with microspheres (26b) into a mold and curing the polymeric material (26a) under controlled temperature conditions in the mold.

9. The method as recited in claim 10, wherein the forming includes injecting the polymeric material (26a) mixed with microspheres into a mold around the heat sensitive core (24).

## Patentansprüche

1. Thermischbeständiges Aktuoatorsystem (210), umfassend:
einen Aktuator (240); und
einen Griff (220), der beweglich ist, um den Aktuator (240) zu bedienen, und wobei der Griff (220) aus einem wärmeempfindlichen Kern (24) aus einer Legierung auf Aluminiumbasis und einer Wärmeschutzschicht (26) an der Außenseite des wärmeempfindlichen Kerns (24) gebildet ist, um eine Wärmeabschirmung bereitzustellen,
wobei die Wärmeschutzschicht (26) eine Dicke von 1 bis 4 mm und eine solche Zusammensetzung aufweist, dass der Griff (220) eine strukturelle Integrität beibehält, sodass das Aktuatorsystem 210 nach einer Exposition gegenüber einer Flamme, die den Griff einer Temperatur von 1100 °C mit einer Wärmeströmungsintensität von 116 kW/m² und einem Gasbrennerdurchmesser von 184 mm für eine Dauer von fünf Minuten aussetzt, betreibbar bleibt, wobei der Griff (220) ohne die Wärmeschutzschicht (26) die strukturelle Integrität nach der Exposition nicht beibehält und
wobei die Zusammensetzung ein duroplastisches Polymermaterial (26a), vermischt mit Mikrokügelchen (26b), einschließt, die aus Aluminiumoxiden, Siliciumoxiden, Zirkoniumoxiden oder Kombinationen davon gebildet sind.

2. System nach einem der vorhergehenden Ansprüche, wobei das Polymermaterial (26a), ungeachtet der Mikrokügelchen, porös ist.

3. System nach einem der vorhergehenden Ansprüche, wobei das Polymermaterial (26a), ungeachtet der Mikrokügelchen (26b), eine Dichte von 0,15 bis 0,5 g/cm³ aufweist.

4. System nach einem der vorhergehenden Ansprüche, wobei die Mikrokügelchen (26b) eine multimodale Größenverteilung aufweisen.

5. System nach einem der vorhergehenden Ansprüche, wobei das Polymermaterial (26a) Polyimid einschließt.

6. System nach einem der vorhergehenden Ansprüche, wobei ferner umfassend eine Bindungsschicht (130) zwischen dem wärmeempfindlichen Kern (24) und einer Wärmeschutzschicht (26) .

7. Verfahren zum Bilden eines thermischbeständigen Aktuoatorsystems (210), umfassend einen Aktuator (240); und einen Griff (220), der beweglich ist, um den Aktuator (240) zu bedienen, und wobei der Griff (220) aus einem wärmeempfindlichen Kern (24) aus einer Legierung auf Aluminiumbasis gebildet ist, wobei das Verfahren Folgendes umfasst:
Bilden einer Wärmeschutzschicht (26) an einer Außenseite des wärmeempfindlichen Kerns (24) des Griffs (220), um eine Wärmeabschirmung bereitzustellen,
wobei die Wärmeschutzschicht (26) mit einer Dicke von 1 bis 4 mm und einer solchen Zusammensetzung gebildet ist, dass der Griff (220) eine strukturelle Integrität beibehält, sodass das Aktuatorsystem (210) nach einer Exposition gegenüber einer Flamme, die den Griff einer Temperatur von 1100 °C mit einer Wärmeströmungsintensität von 116 kW/m² und einem Gasbrennerdurchmesser von 184 mm für eine Dauer von fünf Minuten aussetzt, betreibbar bleibt, wobei der Griff (220) ohne die Wärmeschutzschicht (26) die strukturelle Integrität nach der Exposition nicht beibehält und
wobei die Zusammensetzung ein duroplastisches Polymermaterial (26a), vermischt mit Mikrokügelchen (26b), einschließt, die aus Aluminiumoxiden, Siliciumoxiden, Zirkoniumoxiden oder Kombinationen davon gebildet sind.

8. Verfahren nach Anspruch 10, wobei das Bilden das Einspritzen des mit Mikrokügelchen (26b) vermischten Polymermaterials (26a) in eine Form und das Härten des Polymermaterials (26a) unter geregelten Temperaturbedingungen in der Form einschließt.

9. Verfahren nach Anspruch 10, wobei das Bilden das Einspritzen des mit Mikrokügelchen vermischten Polymermaterials (26a) in eine Form um den wärmeempfindlichen Kern (24) einschließt.

## Revendications

1. Système d'actionneur thermiquement résistant (210) comprenant :
un actionneur (240) ; et
un manche (220) qui est mobile pour actionner l'actionneur (240), et le manche (220) est formé d'un coeur sensible à la chaleur en un alliage à base d'aluminium (24) et d'une couche de protection thermique (26) sur l'extérieur du coeur sensible à la chaleur (24) pour fournir un blindage thermique,
la couche de protection thermique (26) présentant une épaisseur de 1 à 4 mm et une composition de sorte que le manche (220) maintienne l'intégrité structurelle afin que le système d'actionneur (210) reste actionnable après l'exposition à une flamme exposant le manche à une température de 1 100 °C avec une densité de flux thermique de 116 kW/m² et un diamètre de brûleur de gaz de 184 mm pour une durée de cinq minutes, dans lequel sans la couche de protection thermique (26) le manche (220) ne maintient pas ladite intégrité structurelle après ladite exposition, et
la composition inclut un matériau polymère thermodurci (26a) mélangé avec des microsphères (26b) formées d'oxydes d'aluminium, d'oxydes de silicium, d'oxydes de zirconium ou de combinaisons de ceux-ci.

2. Système selon une quelconque revendication précédente, dans lequel le matériau polymère (26a), en dépit des microsphères, est poreux.

3. Système selon une quelconque revendication précédente, dans lequel le matériau polymère (26a), en dépit des microsphères (26b), présente une densité de 0,15 à 0,5 g/cm³.

4. Système selon une quelconque revendication précédente, dans lequel les microsphères (26b) présentent une distribution de taille multimodale.

5. Système selon une quelconque revendication précédente, dans lequel le matériau polymère (26a) inclut du polyimide.

6. Système selon une quelconque revendication précédente, dans lequel il comprend en outre une couche de liaison (130) entre le coeur sensible à la chaleur (24) et une couche de protection thermique (26).

7. Procédé de formation d'un système d'actionneur thermiquement résistant (210) comprenant un actionneur (240) ; et un manche (220) qui est mobile pour actionner l'actionneur (240), et le manche (220) est formé d'un coeur sensible à la chaleur en un alliage d'aluminium (24), le procédé comprenant :
la formation d'une couche de protection thermique (26) sur un extérieur du coeur sensible à la chaleur (24) du manche (220) pour fournir un blindage thermique,
la couche de protection thermique (26) étant formée avec une épaisseur de 1 à 4 mm et une composition de sorte que le manche (220) maintienne une intégrité structurelle afin que le système d'actionneur (210) reste actionnable après l'exposition à une flamme exposant le manche à une température de 1 100 °C avec une densité de flux thermique de 116 kW/m² et un diamètre de brûleur de gaz de 184 mm pour une durée de cinq minutes, dans lequel sans la couche de protection thermique (26) le manche (220) ne maintient pas ladite intégrité structurelle après ladite exposition, et
la composition inclut un matériau polymère thermodurci (26a) mélangé avec des microsphères (26b) formées d'oxydes d'aluminium, d'oxydes de silicium, d'oxydes de zirconium ou de combinaisons de ceux-ci.

8. Procédé selon la revendication 10, dans lequel la formation inclut l'injection du matériau polymère (26a) mélangé avec des microsphères (26b) dans un moule et la cuisson du matériau polymère (26a) dans des conditions de température commandée dans le moule.

9. Procédé selon la revendication 10, dans lequel la formation inclut l'injection du matériau polymère (26a) mélangé avec des microsphères dans un moule autour du coeur sensible à la chaleur (24).
